# EUROPÄISCHE PATENTSCHRIFT

(11) **EP 4 425 035 B1**
(45) Veröffentlichungstag und Bekanntmachung des Hinweises auf die Patenterteilung: **07.10.2026**
(21) Anmeldenummer: 24159871.3
(22) Anmeldetag: 27.02.2024
(51) Int. Cl.: F16P 3/08

(54) **SCHUTZTÜRÜBERWACHUNGSMODUL**
PROTECTIVE DOOR MONITORING MODULE
MODULE DE SURVEILLANCE DE PORTE DE PROTECTION

(30) Priorität: 28.02.2023 DE 102023104853
(43) Veröffentlichungstag der Anmeldung: 04.09.2024
(73) Patentinhaber: Pilz GmbH & Co. KG, 73760 Ostfildern BW Baden-Württemberg (DE)
(72) Erfinder: Rink, Joachim, 73760 Ostfildern (DE); Veit, Andreas, 73760 Ostfildern (DE)
(74) Vertreter: Witte, Weller & Partner Patentanwälte mbB

(56) Entgegenhaltungen:
- DE-U1- 9 013 198
- US-A1- 2015 040 348
- US-A1- 2019 178 014

## Beschreibung

Die vorliegende Erfindung betrifft ein Schutztürüberwachungsmodul zur Überwachung eines Zustands einer Schutztür.

Gemäß einem weiteren Aspekt betrifft die vorliegende Erfindung ein Schutztürüberwachungssystem mit einer Schutztür als Zugang zu einem Sicherheitsbereich, einem Schutztürüberwachungsmodul der oben genannten Art, einem Betätiger und einer Steuerungseinheit, welche dazu eingerichtet ist, ein Schutztürsignal auszulesen und eine im Sicherheitsbereich befindliche Maschine oder Anlage in Abhängigkeit des Schutztürsignals zu steuern.

Schutztürüberwachungsmodule der oben genannten Art werden häufig auch als Sicherheitsschalter bezeichnet. Beispielhafte Schutztürüberwachungsmodule bzw. Sicherheitsschalter der eingangs genannten Art sind aus der DE 10 2005 057 108 A1, der DE 103 05 704 B3, der DE 10 2008 060 004 A1, der DE 10 2020 120 817 A1 und aus der US 2019/0178014 A1 bekannt. Die DE 90 13 198 U1, welche die Grundlage für den Oberbegriff des Anspruchs 1 bildet, offenbart einen Sicherheitsschalter für Schutzabdeckungen. In der US 2015/0040348 A1 offenbart ferner einen Türfeststeller.

Gattungsgemäße Schutztürüberwachungsmodule werden an Schutztüren, Schutzklappen und dergleichen eingesetzt. Wenngleich vorliegend die Begriffe "Schutztürüberwachungsmodul" und "Schutztür" verwendet werden, kann das erfindungsgemäße Schutztürüberwachungsmodul an jeglicher Art von trennender Schutzeinrichtung zum Einsatz kommen. Der Begriff "Schutztür" ist im vorliegenden Sinne dementsprechend weit aufzufassen. Anstelle des allgemeinen Begriffs "trennende Schutzeinrichtung" wird daher im Folgenden ausschließlich der Begriff "Schutztür" verwendet, ohne dass dies eine Beschränkung des Schutzbereichs zur Folge haben soll.

Schutztüren, an denen das erfindungsgemäße Schutztürüberwachungsmodul bspw. zum Einsatz kommen kann, dienen typischerweise als Zugang zu einem Sicherheitsbereich, in dem sich eine automatisiert arbeitende Maschine oder Anlage befindet. Bei der Maschine kann es sich bspw. um einen Roboter, eine Werkzeugmaschine mit schnelldrehender Spindel, eine Transport- oder Förderanlage, eine Presse oder eine andere Maschine oder Anlage handeln, von deren Betrieb eine Gefahr für Personen ausgeht, die sich in dem genannten Sicherheitsbereich bzw. im Arbeitsbereich der Maschine befinden. Das Schutztürüberwachungsmodul kann als Meldegerät dienen, mit dessen Hilfe eine Steuerungseinheit den geschlossenen Zustand der Schutztür erkennen kann. Die Steuerungseinheit ist dazu eingerichtet, das von dem Schutztürüberwachungsmodul erzeugte Schutztürsignal auszulesen und die Maschine in Abhängigkeit des Schutztürsignals zu steuern. Beispielsweise ist ein Betreiben der Maschine nur bei Vorhandensein des Schutztürsignals möglich. Die Steuerungseinheit ist also mit anderen Worten dazu eingerichtet, ein Betreiben der Maschine oder Anlage nur dann zu ermöglichen, wenn sie das Schutztürsignal von dem Schutztürüberwachungsmodul empfängt, d.h. wenn die Schutztür geschlossen ist. Wird die Schutztür hingegen im laufenden Betrieb geöffnet (sofern möglich), muss die Steuerungseinheit die Maschine oder Anlage in einen gefahrlosen Zustand bringen, in dem bspw. die Stromversorgung zu der Maschine oder Anlage abgeschaltet wird.

Es gibt eine Vielzahl von Maschinen und Anlagen, von denen auch nach dem Abschalten noch für eine gewisse Zeit eine Gefahr ausgeht, bspw. weil die Maschine oder Anlage noch ausläuft. Für derartige Anwendungsfälle werden Schutztürüberwachungsmodule benötigt, die ein Öffnen der Schutztür so lange verhindern, bis die Maschine oder Anlage ihren gefahrlosen Zustand erreicht hat. Diese Funktion wird als Zuhaltung bezeichnet.

Klassischerweise besitzen Schutztürüberwachungsmodule der vorliegenden Art einen sogenannten Betätiger und eine als Gegenstück dazu fungierende Betätigeraufnahme. Die Betätigeraufnahme ist Teil eines Grundgeräts, in dem typischerweise weitere elektronische Bauteile untergebracht sind und von dem meist die Anschlussleitungen ausgehen, die das Schutztürüberwachungsmodul mit der Steuerungseinheit verbinden. Dementsprechend ist das Grundgerät mit der Betätigeraufnahme vorzugsweise an einem unbeweglichen Teil der Schutztür (z.B. an einer Türzarge) angeordnet, während der Betätiger vorzugsweise an einem beweglichen Teil der Schutztür (z.B. an einem beweglichen Türflügel) angeordnet ist. Dies hat den Vorteil, dass der Teil des Schutztürüberwachungsmoduls, welcher an dem beweglichen Teil der Schutztür angeordnet ist, nicht mit Strom versorgt werden muss, da in der Regel nur das Grundgerät des Schutztürüberwachungsmoduls mit Strom versorgt werden muss.

Bei geschlossener Schutztür greift der Betätiger in die Betätigeraufnahme, was mit Hilfe eines oder mehrerer Sensoren detektiert wird. Bei einem Schutztürüberwachungsmodul mit Zuhaltung wird der Betätiger außerdem in der Betätigeraufnahme gegen ein Zurückziehen blockiert bzw. verriegelt. Die sogenannte Zuhaltung weist eine Verriegelungseinrichtung zum Verriegeln des Betätigers in der Betätigeraufnahme auf.

In dem letztgenannten Fall erfüllt das Schutztürüberwachungsmodul also zwei Funktionen, nämlich einerseits eine Detektionsfunktion, mit dessen Hilfe die Schließposition der Schutztür detektiert wird, und andererseits eine Zuhaltefunktion, die ein Öffnen der Schutztür so lange verhindert, wie der Betätiger in der Betätigeraufnahme verriegelt ist. Die Freigabe des Betätigers kann bspw. über einen elektromotorischen Aktor erfolgen, der von der Steuerungseinheit betätigt wird, sobald die überwachte Maschine oder Anlage ihren sicheren Zustand eingenommen hat.

Ein Schutztürüberwachungsmodul dieser Art wird von der Anmelderin unter dem Namen PSENmlock vertrieben. Dieses Schutztürüberwachungsmodul ist vielseitig einsetzbar. Der Betätiger des Schutztürüberwachungsmoduls kann im Wesentlichen stab- bzw. stiftförmig und die als Gegenstück dazu fungierende Betätigeraufnahme eine durchgängige Nut, eine U-förmige Öffnung oder ein Sack- oder Durchgangsloch aufweist, in welche bzw. welches der stab- bzw. stiftförmige Betätiger eingreift.

Es hat sich gezeigt, dass wiederholte Schließ- und Öffnungsvorgänge der Schutztüre nach bestimmungsgemäßem Gebrauch zu Materialverschleiß an dem Betätiger und der Zuhaltevorrichtung bzw. Betätigeraufnahme führen. Dieser Verschleiß kann dazu führen, dass eine geforderte Lebensdauer des Schutztürüberwachungsmoduls mit einer vorgegebenen Anzahl von Schließ- und Öffnungsvorgänge nicht erfüllt werden kann. Zudem kann hierdurch ein Sicherheitsrisiko entstehen, da die Zuhaltefunktion nicht mehr ausreichend sicher garantiert werden kann.

Es ist daher eine Aufgabe der vorliegenden Erfindung, ein Schutztürüberwachungsmodul bereitzustellen, welches eine erhöhte Lebensdauer und/oder verbesserte Zuverlässigkeit aufweist.

Diese Aufgabe wird ausgehend von einem Schutztürüberwachungsmodul der eingangs genannten Art dadurch gelöst, dass das Schutztürüberwachungsmodul zur Überwachung eines Zustands einer Schutztür eine Betätigeraufnahme zur Aufnahme eines Betätigers aufweist und dazu eingerichtet ist, ein Schutztürsignal zu erzeugen, wenn der Betätiger in die Betätigeraufnahme eingeführt ist, wobei die Betätigeraufnahme eine Zuhaltevorrichtung aufweist, die dazu ausgebildet ist, in einem aktivierten Zustand den Betätiger in der Betätigeraufnahme festzuhalten, wobei die Zuhaltevorrichtung eine Federeinrichtung, eine Verriegelungseinrichtung und einen Bolzen mit einer Lagerkörperaufnahme und einem in der Lagerkörperaufnahme drehbar gelagerten Lagerkörper aufweist, der an einem freien Ende des Bolzens, welches dazu ausgebildet ist, in dem aktivierten Zustand in den Betätiger einzugreifen, angeordnet ist. Der Bolzen ist mittels der Federeinrichtung vorgespannt, so dass der Bolzen beim Einführen des Betätigers in die Betätigeraufnahme und beim Ausführen des Betätigers aus der Betätigeraufnahme entgegen der von der Federeinrichtung erzeugten Federkraft ausweicht. Die Verriegelungseinrichtung ist dazu ausgebildet, den Bolzen in dem aktivierten Zustand der Zuhaltevorrichung zu verriegeln, wodurch der Betätiger in der Betätigeraufnahme festgehalten wird.

Die erfindungsgemäße Zuhaltevorrichtung weist also insbesondere einen Lagerkörper auf, der drehbar in dem Bolzen gelagert ist und derart angeordnet ist, dass der Lagerkörper mit dem Betätiger in Kontakt sein kann. Im Gegensatz zu herkömmlichen Zuhaltevorrichtungen, bei denen ein Bolzen auf einem Betätiger gleitet, kann gemäß der vorliegenden Erfindung der in dem Bolzen gelagerte Lagerkörper auf dem Betätiger abrollen. Die vorliegende Erfindung ermöglicht es somit, vorteilhafterweise Reibung und/oder Verschleiß in dem Reibkontakt zwischen Zuhaltevorrichtung und Betätiger zu reduzieren und somit auch Verschluss- und Öffnungskräfte in dem Schutztürüberwachungsmodul zu minimieren.

Der Lagerkörper kann beim Einführen des Betätigers in die Betätigeraufnahme mit dem Betätiger in Kontakt sein, um das Einführen des Betätigers in die Betätigeraufnahme zu vereinfachen und/oder um Reibung und/oder Verschleiß zwischen der Zuhaltevorrichtung und dem Betätiger zu reduzieren. Rollt der Lagerkörper auf dem Betätiger während des Einführens des Betätigers in die Betätigeraufnahme ab, anstatt auf dem Betätiger zu gleiten, so ist der Reibkontakt vorwiegend durch Rollreibung anstatt durch Gleitreibung charakterisiert. Somit kann die Reibung im Reibkontakt reduziert werden. Gleiches gilt für den Öffnungsvorgang der Schutztür, bei dem der Betätiger aus der Betätigeraufnahme herausgeführt wird.

Somit ist auf konstruktiv einfache und kostengünstige Art und Weise eine Lösung geschaffen, den Verschleiß zwischen der Zuhaltevorrichtung und dem Betätiger zu reduzieren und die Zuverlässigkeit der Zuhaltevorrichtung zu erhöhen.

Die vorliegende Erfindung ermöglicht zudem vorteilhafterweise eine freiere und somit einfachere Gestaltung des Bolzens. Insbesondere die Form des Bolzens kann unabhängiger von dem Betätiger gestaltet werden. Gleichzeitig kann der Lagerkörper unabhängig von dem Rest des Bolzens beispielsweise hinsichtlich Oberflächengüte bearbeitet werden, um die Eigenschaften des Reibkontakts zu verbessern. Dies kann sich vereinfachend auf die Fertigung der Zuhaltevorrichtung und/oder des Betätigers auswirken.

Zudem ermöglicht es die vorliegende Erfindung, den Lagerkörper unabhängig von dem Rest des Bolzens auszutauschen. Auch wenn die Zuhaltevorrichtung gemäß der vorliegenden Erfindung gegenüber herkömmlichen Zuhaltevorrichtungen mit einem reduzierten Verschleiß einhergeht, so kann dennoch der Lagerkörper mit fortlaufendem Gebrauch verschleißen. In diesem Fall ermöglicht die vorliegende Erfindung gezielt nur den Lagerkörper auszutauschen und die übrigen Teile des Bolzens weiter zu benutzen. Somit können die Bauteile der Zuhaltevorrichtung nachhaltig genutzt werden.

Um die Eigenschaften des Reibkontakts (z.B. Reibungskoeffizient zwischen den Reibkontaktpartnern) wie gefordert einzustellen, werden gewöhnlicherweise insbesondere die Werkstoffe der Reibkontaktpartner aufeinander abgestimmt. Die vorliegende Erfindung ermöglicht es zudem, dass die Zuhaltevorrichtung verschiedene Materialen (Werkstoffe) aufweisen kann. Dadurch können die Werkstoffe der Reibkontaktpartner besser aufeinander abgestimmt werden.

Gemäß der vorliegenden Erfindung kann der Lagerkörper einen Werkstoff aufweisen, der unterschiedlich von dem Werkstoff des Bolzens ist. Somit kann durch eine selektierte Werkstoffkombination von Lagerkörper und Betätiger die Eigenschaften des Reibkontakts festgelegt werden, wobei gleichzeitig die Auswahl des Werkstoffs des Bolzens unabhängiger von dem Werkstoff des Betätigers gewählt werden kann.

Die oben genannt Aufgabe ist daher vollständig gelöst.

Gemäß einer bevorzugten Ausgestaltung weist der Bolzen eine Verliersicherung auf, die dazu ausgebildet ist, den drehbar gelagerten Lagerkörper verliersicher an dem Bolzen zu halten.

Mithilfe der Verliersicherung ist der Lagerköper dauerhaft in der gewünschten Position und/oder Ausrichtung im Bolzen gehalten. Somit kann die Zuverlässigkeit des Schutztürüberwachungsmoduls verbessert werden.

Gemäß einer weiteren Ausgestaltung ist die Verliersicherung mittels einer Querschnittsverengung der Lagerkörperaufnahme gebildet.

Die Lagerkörperaufnahme ist gemäß dieser Ausgestaltung also verengt, um den Lagerkörper in der gewünschten Position und/oder Ausrichtung im Bolzen zu halten. Die Querschnittsverengung kann als Rastelement für den Lagerkörper fungieren. Dies ermöglicht eine einfache und kostengünstige Fertigung der Zuhaltevorrichtung.

Gemäß einer anderen Ausgestaltung ist der Durchmesser der Querschnittsverengung kleiner als der Durchmesser des Lagerkörpers.

Dadurch ist sichergestellt, dass sich der drehbar gelagerte Lagerkörper nicht aus der Lagerkörperaufnahme herauslösen kann. Somit wird der Lagerkörper sicher in der gewünschten Position und/oder Ausrichtung im Bolzen gehalten.

Gemäß einer bevorzugten Ausgestaltung ist der Lagerkörper eine Kugel.

Eine Kugel hat den Vorteil, dass sich die Kugel aufgrund ihrer Symmetrie als multidirektional wirkender Lagerkörper verwenden lässt. Somit lässt sich der Betätiger aus jeder Richtung in den Betätiger einführen, während die Kugel als Lagerkörper die genannte Funktion der Reibungs- und Verschleißreduktion übernimmt.

Der Lagerkörper kann jedoch auch eine andere geeignete Form, wie beispielsweise die eines Kreiszylinders, aufweisen, welche sich insbesondere zum Drehen bzw. Abrollen auf dem Betätiger eignet.

Gemäß einer Ausgestaltung weist die Lagerkörperaufnahme einen ersten Abschnitt, der konisch, kugelkalottenförmig oder zylindrisch ist, und einen zweiten Abschnitt, der zylindrisch ist, auf.

Der erste Abschnitt kann insbesondere zumindest zu einem Teil in Kontakt mit dem Lagerkörper sein und/oder als Aufnahme für einen Lagereinsatz fungieren. Der zweite Abschnitt kann insbesondere zumindest zu einem Teil in Kontakt mit dem Lagerkörper sein und/oder als Ummantelung bzw. Gehäuse (insbesondere gegen das Eindringen von Fremdkörpern) fungieren.

Gemäß einer Ausgestaltung ist mehr als die Hälfte des Lagerkörpers innerhalb der Lagerkörperaufnahme angeordnet.

Damit ist insbesondere mehr als die Hälfte des Volumens des Lagerkörpers gemeint. Somit ist der Großteil des Lagerkörpers in der Lagerkörperaufnahme geschützt. Der andere Teil des Lagerkörpers, also weniger als die Hälfte (des Volumens) des Lagerkörpers, ist außerhalb der Lagerkörperaufnahme angeordnet und kann mit dem Betätiger in Kontakt sein.

Gemäß einer bevorzugten Ausgestaltung weist der Bolzen einen Grundkörper und eine darin eingesetzte Lagerschale auf, die zumindest einen Teil der Lagerkörperaufnahme bildet.

Daher ist der Bolzen zumindest zwei- bzw. dreiteilig aufgebaut. Eine Lagerschale als separates Bauteil, welches in den Bolzen eingesetzt ist, ermöglicht eine einfache Herstellung des Bolzens.

Der Lagerkörper ist drehbar in der (eingesetzten) Lagerschale angeordnet. Die Lagerschale kann dazu ausgebildet sein, den Lagerkörper so aufzunehmen, dass der Lagerkörper auf der Lagerschale abrollen kann. Vorteilhafterweise können somit reduzierte Anforderungen an die Ausgestaltung des Bolzens sowie die Ausgestaltung der Lagerkörperaufnahme gestellt werden, sodass die Herstellung des Bolzens vereinfacht werden kann. Zusätzlich kann der Reibkontakt geschmiert sein.

Bevorzugterweise ist die Lagerkörperaufnahme auf einer dem Lagerkörper entgegengesetzten Seite konisch ausgebildet.

Dies ermöglicht vorteilhafterweise eine relative einfache Fertigung der Lagerkörperaufnahme, beispielsweise mittels Vornahme einer Bohrung in den Bolzen hinein. Weist der Bolzen eine Lagerschale auf, so kann vorteilhafterweise nur ein Loch gebohrt werden, um die Lagerschale einzusetzen.

Gemäß einer Ausgestaltung weist der Grundkörper des Bolzens ein erstes Material und die Lagerschale ein von dem ersten Material unterschiedliches, zweites Material auf.

Vorteilhafterweise ermöglicht diese Ausgestaltung, dass die eingesetzte Lagerschale ein Material (Werkstoff) aufweist, das unterschiedlich von dem Material des Bolzens ist. Somit können die Eigenschaften des Reibkontakts zwischen Lagerkörper und Lagerschale unabhängig von dem Material des Bolzens gezielt eingestellt werden (insbesondere hinsichtlich Reduzierung von Reibung und Verschleiß).

Gemäß einer anderen Ausgestaltung weist der Bolzen eine Hülse auf, die an einem Grundkörper des Bolzens befestigt ist und zumindest einen Teil der Lagerkörperaufnahme bildet.

Die Lagerkörperaufnahme ist gemäß dieser Ausgestaltung also mindestens zweiteilig ausgestaltet, wobei zumindest ein Teil der Lagerkörperaufnahme durch den Grundkörper des Bolzens und die daran befestigte Hülse gebildet wird. Vorteilhafterweise können somit an den Grundkörper des Bolzens hinsichtlich Herstellung reduzierte Anforderungen gestellt werden, sodass eine kostengünstige und einfache Herstellung des Bolzens ermöglicht wird.

Gemäß einer weiteren Ausgestaltung bildet die Hülse zumindest einen Teil der Verliersicherung. Bevorzugterweise bildet die Hülse dabei einen Teil der Querschnittsverengung der Lagerkörperaufnahme. Die Hülse kann somit als Rastelement für den Lagerkörper fungieren.

Vorteilhafterweise können somit an den Grundkörper des Bolzens hinsichtlich Fertigung der Lagerkörperaufnahme weiter reduzierte Anforderungen gestellt werden, sodass die Herstellung des Bolzens vereinfacht werden kann. Zudem kann vorteilhafterweise der Lagerkörper leichter vormontiert werden, sodass die Hülse zum Beispiel als Verliersicherung für den Montagevorgang dienen kann.

Die Hülse kann an dem Grundkörper des Bolzens lösbar oder nicht lösbar befestigt sein. Insbesondere kann die Hülse kraft- und formschlüssig an dem Grundkörper befestigt sein, wie beispielsweise mittels eines Gewindes, einem Niet oder einem Stift. Die Hülse kann ebenfalls oder zusätzlich stoffschlüssig mit dem Grundkörper verbunden sein, insbesondere verklebt, verlötet und/oder verschweißt sein. Die Hülse kann beispielsweise auch auf den Grundkörper aufgeschrumpft sein. Eine lösbar an den Grundkörper befestigte Hülse kann sich dahingehend vorteilhaft auswirken, dass der Lagerkörper einfach ausgetauscht werden kann - beispielsweise nachdem eine bestimmte Anzahl von Schließ- und Öffnungsvorgängen des Betätigers und/oder eine vorgegebene Verschleißgrenze überschritten wurde.

Gemäß einer Ausgestaltung weist der Bolzen eine Vielzahl von Lagerkugeln auf, die in der Lagerkörperaufnahme angeordnet sind.

Der Lagerkörper und die Lagerkugeln können dazu ausgebildet sein, miteinander in Kontakt zu sein und aufeinander abzurollen. Vorteilhafterweise können die Lagerkugeln ein Material aufweisen, das unterschiedlich von dem Material des Bolzens ist. Dadurch können die Eigenschaften des Reibkontakts zwischen Lagerkörper und Lagerkugeln insbesondere einfacher unabhängiger von dem Bolzen gezielt eingestellt werden (insbesondere hinsichtlich Reduzierung von Reibung und Verschleiß).

Bevorzugterweise weisen die Lagerkugeln jeweils einen Durchmesser auf, der jeweils kleiner als der Durchmesser des Lagerkörpers ist. Weiter bevorzugt weisen die Lagerkugeln jeweils den gleichen Durchmesser auf.

Vorzugsweise weist der Betätiger zumindest zu einem Teil (insbesondere in dem Kontaktbereich mit der Zuhaltevorrichtung im aktivierten Zustand der Zuhaltevorrichtung) als Werkstoff eine Chrom-Nickel-Molybdän-Edelstahllegierung und/oder der Lagerkörper einen Wälzlagerstahl und/oder der Bolzen einen Automaten- oder einen Einsatzstahl auf.

Wie eingangs bereits erwähnt, betrifft ein weiterer Aspekt der vorliegenden Erfindung ein Schutztürüberwachungssystem, welches eine Schutztür der zuvor genannten Art (mit einem erfindungsgemäßem Schutztürüberwachungsmodul), einen Betätiger und eine Steuerungseinheit aufweist.

Vorzugsweise handelt es sich bei dem ersten Teil der Schutztür, an dem das Grundgerät angeordnet ist, um einen unbewegten Teil der Schutztür (z.B. um einen Türrahmen oder eine Türzarge). Äquivalent dazu handelt es sich bei dem zweiten Teil der Schutztür, an dem der Betätiger angeordnet ist, vorzugsweise um ein bewegliches Türelement (z.B. ein Türflügel). Die Anordnung des Grundgeräts an dem unbewegten Teil der Schutztür hat den Vorteil, dass eine Stromversorgung des am beweglichen Teil der Schutztür montierten Teils des Schutztürüberwachungsmoduls unterbleiben kann, da typischerweise nur das Grundgerät des Schutztürüberwachungsmoduls mit Strom versorgt werden muss.

Bevorzugterweise weist der Betätiger eine Aufnahme auf, die dazu ausgebildet ist, die Zuhaltevorrichtung im aktivierten Zustand aufzunehmen. Weiter bevorzugt ist die Aufnahme des Betätigers dazu ausgebildet, in Kontakt mit dem Lagerkörper zu sein. Die Aufnahme des Betätigers weist daher bevorzugterweise eine der Form des Lagerkörpers entsprechende Gegenform auf, insbesondere eine konische, kugelkalottenförmige oder zylindrische Gegenform.

Es versteht sich, dass die vorstehend genannten und die nachstehend noch erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine schematische Darstellung eines Schutztürüberwachungssystems gemäß einem Ausführungsbeispiel der vorliegenden Erfindung;
- Fig. 2: eine perspektivische Ansicht eines Schutztürüberwachungsmoduls mit einem Betätiger gemäß einem Ausführungsbeispiel der vorliegenden Erfindung;
- Fig. 3A: eine Front-Ansicht des in Fig. 2 gezeigten Schutztürüberwachungsmoduls mit dem Betätiger;
- Fig. 3B: eine Schnittdarstellung des in Fig. 2 gezeigten Schutztürüberwachungsmoduls mit Betätiger;
- Fig. 4: eine perspektivische Ansicht des Betätigers gemäß einem Ausführungsbeispiel der vorliegenden Erfindung;
- Fig. 5: eine Schnittdarstellung eines in dem Schutztürüberwachungsmodul verwendeten Bolzens gemäß einem ersten Ausführungsbeispiel der vorliegenden Erfindung;
- Fig. 6: eine Schnittdarstellung zur schematischen Veranschaulichung eines Herstellungsschritts zur Herstellung des in Fig. 5 gezeigten Bolzens;
- Fig. 7: eine Schnittdarstellung des Bolzens gemäß einem zweiten Ausführungsbeispiel der vorliegenden Erfindung;
- Fig. 8: eine Schnittdarstellung des Bolzens gemäß einem dritten Ausführungsbeispiel der vorliegenden Erfindung;
- Fig. 9: eine Schnittdarstellung des Bolzens gemäß einem vierten Ausführungsbeispiel der vorliegenden Erfindung;
- Fig. 10: eine Schnittdarstellung des Bolzens gemäß einem fünften Ausführungsbeispiel der vorliegenden Erfindung;
- Fig. 11A: eine Schnittdarstellung des Bolzens gemäß einem sechsten Ausführungsbeispiel der vorliegenden Erfindung;
- Fig. 11B: eine erste Explosionsdarstellung des in Fig. 11A gezeigten Bolzens;
- Fig. 11C: eine zweite Explosionsdarstellung des in Fig. 11A gezeigten Bolzens;
- Fig. 12: eine Explosionsdarstellung des Bolzens gemäß einem siebten Ausführungsbeispiel der vorliegenden Erfindung;
- Fig. 13: eine perspektivische Ansicht des Bolzens gemäß einem achten Ausführungsbeispiel der vorliegenden Erfindung;
- Fig. 14: eine perspektivische Ansicht des Bolzens gemäß einem neunten Ausführungsbeispiel der vorliegenden Erfindung; und
- Fig. 15: eine perspektivische Ansicht des Bolzens gemäß einem zehnten Ausführungsbeispiel der vorliegenden Erfindung.

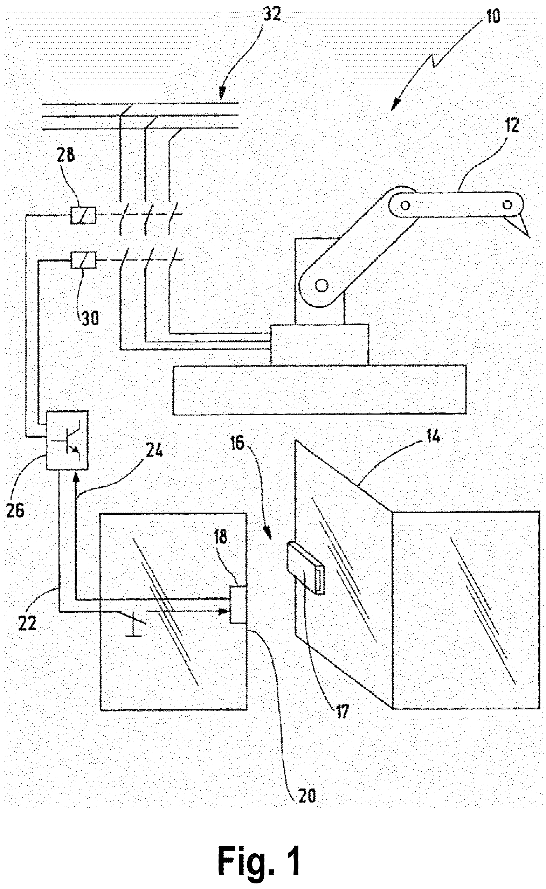

Fig. 1 zeigt eine schematische Ansicht eines Ausführungsbeispiels eines erfindungsgemäßen Schutztürüberwachungssystems. Das Schutztürüberwachungssystem ist darin in seiner Gesamtheit mit der Bezugsziffer 10 bezeichnet.

Das Schutztürüberwachungssystem 10 beinhaltet hier einen Roboter 12, dessen Arbeitsbereich mit Hilfe einer Schutztür 14 abgesichert ist. An der Schutztür 14 ist ein Schutztürüberwachungsmodul 16 gemäß der vorliegenden Erfindung angeordnet.

Das Schutztürüberwachungsmodul 16 umfasst ein Türteil 17, welches an dem beweglichen Türelement (Türflügel) der Schutztür 14 angeordnet ist, und ein Rahmenteil 18, das an einem unbeweglichen zweiten Teil 20 der Schutztür 14 angeordnet ist. In dem dargestellten Ausführungsbeispiel handelt es sich bei dem unbeweglichen zweiten Teil 20 der Schutztür 14 um einen Türrahmen bzw. eine Türzarge. In anderen Ausführungsbeispielen kann dieser zweite unbewegliche Teil 20 der Schutztür 14 auch ein zweiter Türflügel einer zweiteiligen Schutztür sein.

Das Rahmenteil 18 des Schutztürüberwachungsmoduls 16 ist über zwei Leitungen 22, 24 mit einem Sicherheitsschaltgerät 26 verbunden. Das Sicherheitsschaltgerät 26 ist bspw. ein Sicherheitsschaltgerät aus der Reihe PNOZ<^{®}>, das von der Anmelderin der vorliegenden Erfindung vertrieben wird. Es handelt sich hierbei um ein mehrkanalig-redundantes Sicherheitsschaltgerät, das dazu ausgebildet ist, die Ausgangssignale von Meldegeräten, wie dem Schutztürüberwachungsmodul 16, auszuwerten und in Abhängigkeit davon einen elektrischen Verbraucher abzuschalten. Der elektrische Verbraucher ist in diesem Fall der Roboter 12. Dementsprechend steuert das Sicherheitsschaltgerät 26 zwei Schütze 28, 30 an, deren Arbeitskontakte in der Verbindung zwischen einer Stromversorgung 32 und dem Roboter 12 angeordnet sind.

Alternativ zu dem Sicherheitsschaltgerät 26 könnte das Schutztürüberwachungsmodul 16 auch an eine programmierbare Sicherheitssteuerung angeschlossen sein, wie sie von der Anmelderin der vorliegenden Erfindung unter der Bezeichnung PSS<^{®}> vertrieben wird. Das Sicherheitsschaltgerät 26 wird daher nachfolgend allgemein als Steuerungseinheit 26 des Schutztürüberwachungssystems 10 bezeichnet, ohne dadurch auf eine spezielle Ausgestaltung dieser Steuerungseinheit beschränkt zu sein. Im Folgenden werden mehrere Ausführungsbeispiele des erfindungsgemäßen Schutztürüberwachungsmoduls 16 beschrieben. Gleiche oder äquivalente Bauteile werden dabei mit den gleichen Bezugszeichen bezeichnet.

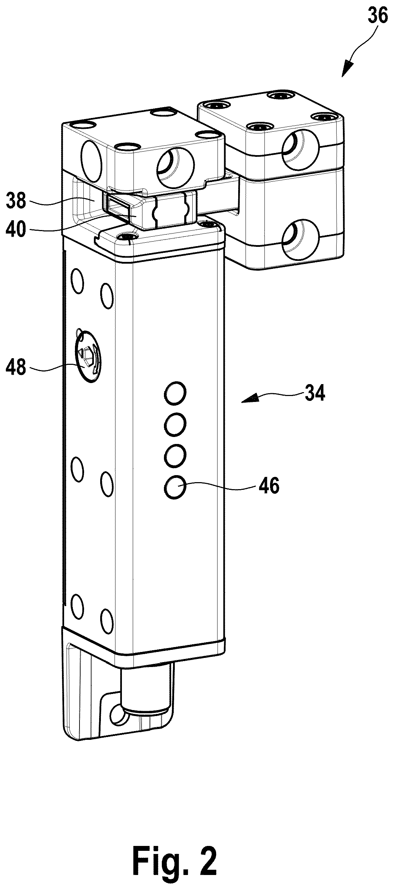

Fig. 2 zeigt ein eine perspektivische Ansicht des Schutztürüberwachungsmoduls 16 mit einem Grundgerät 34 und einen mit dem Grundgerät 34 zusammenwirkenden Betätiger 36. Das Grundgerät 34 umfasst vorzugsweise einen oder mehrere Sensoren und/oder weitere elektronische Bauteile und ist daher vorzugsweise an eine Stromversorgung angeschlossen. Des Weiteren ist das Grundgerät 34 vorzugsweise über mehrkanalig-redundante Leitungen, wie hier die Leitungen 22, 24 mit der Steuerungseinheit 26 verbunden. Das Grundgerät 34 bildet vorzugsweise das zuvor erwähnte Rahmenteil 18 des Schutztürüberwachungsmoduls 16.

Wenngleich es ebenso denkbar wäre, das Grundgerät 34 als Türteil 17 des Schutztürüberwachungsmoduls 16 einzusetzen, ist dies weniger bevorzugt. In einem solchen Fall müsste die meist feste Verdrahtung mit der Steuerungseinheit 26 sowie die Stromversorgung an den beweglichen Teil der Schutztür 14 hingeführt sein, was in der Regel umständlicher ist als eine Zuführung der Leitungen 22, 24 sowie der Stromversorgung an den statischen Teil 20 der Schutztür 14.

Der Betätiger 36 fungiert als Gegenstück zu dem Grundgerät 34 und dient der Betätigung des Grundgeräts 34. Das Grundgerät 34 weist hierzu eine entsprechende Betätigeraufnahme 38 auf, in die der Betätiger 36 einführbar ist.

Eine Funktion des Grundgeräts 34 ist es, zu detektieren, ob der Betätiger 36 in die Betätigeraufnahme 38 eingeführt ist oder nicht. Hierzu weist der Betätiger 36 vorzugsweise einen RFID-Chip auf, der von einem in der Betätigeraufnahme 38 angeordneten Detektor auslesbar ist. Das Grundgerät 34 ist dazu eingerichtet, ein Schutztürsignal zu erzeugen, wenn der Betätiger 36 in die Betätigeraufnahme 38 eingeführt ist. Dieses Schutztürsignal wird vorzugsweise als elektrisches Signal erzeugt. Es kann sich hierbei um ein digitales, ein gepulstes, ein codiertes und/oder sonstiges (vorzugsweise elektrisches) Signal handeln.

Durch Auswertung des Schutztürsignals in der Steuerungseinheit 26 kann das Schutztürüberwachungssystem 10 zu jeder Zeit eindeutig feststellen, ob die Schutztür 14 geschlossen ist oder nicht. Der Roboter 12 kann in Abhängigkeit dessen derart gesteuert werden, dass dieser nur bei geschlossener Schutztür 14 betreibbar ist.

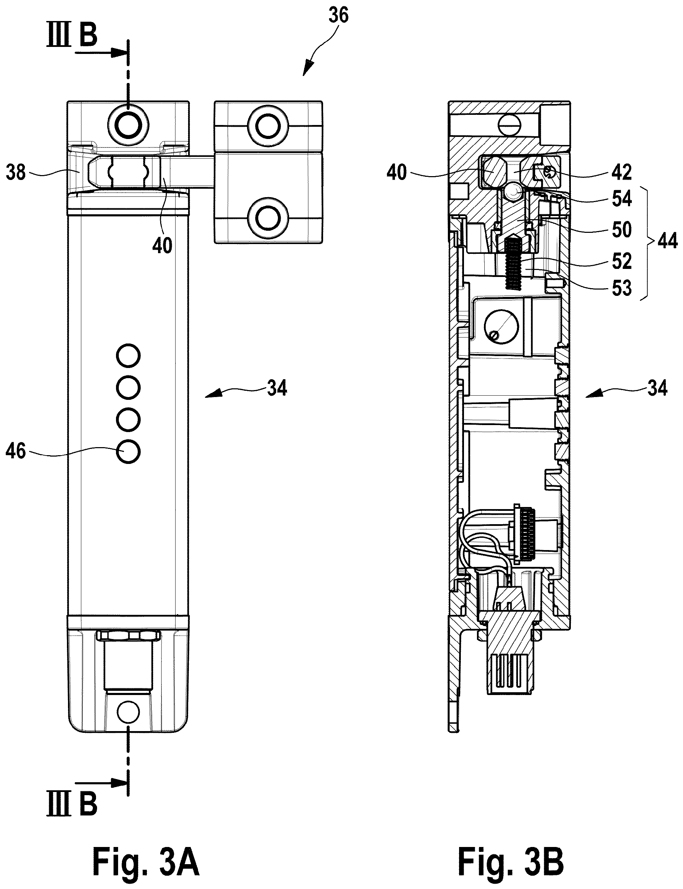

Fig. 2, 3A und 3B zeigen das Betätigerelement 40 im geschlossenen Zustand der Schutztür 14 in der Betätigeraufnahme 38 eingeführt. In dem in Fig. 2-4 gezeigten Ausführungsbeispiel weist der Betätiger 36 ein im Wesentlichen stab-/stift-förmiges Betätigerelement 40 auf, welches in die Betätigeraufnahme 38 einführbar ist. An seiner in die Betätigeraufnahme 38 eingeführten Stirnseite weist das Betätigerelement 40 ein als Fangbohrung ausgebildetes Durchgangsloch 42 (siehe Fig. 3B) auf, in das eine Zuhaltevorrichtung 44 eingreift, um den Betätiger 36 im aktivierten Zustand der Zuhaltefunktion in der Betätigeraufnahme 38 festzuhalten.

Das Grundgerät 34 weist ferner ein oder mehrere optische Kontrollanzeigen 46 auf, welche einen Zustand des Schutztürüberwachungsmoduls 16 anzeigen. Des Weiteren weist das Grundgerät 34 eine Bedieneinrichtung 48 auf, mittels derer ein Benutzer einen Zustand des Schutztürüberwachungsmoduls 16 ändern kann. Zum Beispiel ist die Bedieneinrichtung 48 ist dazu ausgebildet, die Zuhaltefunktion des Schutztürüberwachungsmoduls 16 als "Notfallentriegelung" manuell zu deaktivieren, indem die Zuhaltevorrichtung 44 entriegelt wird.

Die Zuhaltevorrichtung 44 weist einen Bolzen 50, eine Federeinrichtung 52 und eine Verriegelungseinrichtung 53 auf. Der Bolzen 50 weist einen daran drehbar gelagerten Lagerkörper 54 auf und ist mittels der Federeinrichtung 52 vorgespannt und dazu eingerichtet, in das Durchgangsloch 42 des Betätigers 36 einzugreifen. Durch die Federvorspannung weicht der Bolzen 50 beim Ein- und Ausführen des Betätigers 36 in bzw. aus der Betätigeraufnahme 38 nach unten hin entgegen der von der Federeinrichtung 52 erzeugten Federkraft aus. Die Verriegelungseinrichtung 53 ist dazu ausgebildet, im aktivierten Zustand der Zuhaltevorrichung 44 den Bolzen 50 zu verriegeln, wodurch der Betätiger 36 in der Betätigeraufnahme 38 festgehalten wird.

Das Verriegeln des Bolzens 50 kann automatisch infolge eines Signals (z.B. von der Steuereinheit 26 oder dem Schutztürüberwachungsmodul 16) oder manuell mittels der Bedieneinrichtung 48 erfolgen. Soll die Schutztür 14 wieder geöffnet werden, muss der Betätiger 36 zunächst wieder aus der Betätigeraufnahme 38 ausgeführt werden. Dafür gibt die Verriegelungseinrichtung 53 den Bolzen 50 automatisch infolge eines entsprechenden Signals oder infolge manueller Entriegelung mittels der Bedieneinrichtung 48 wieder frei.

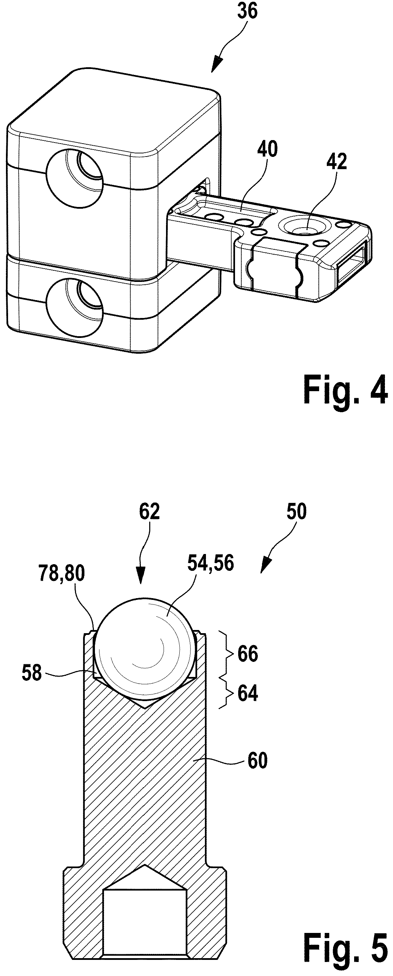

Fig. 5 zeigt ein erstes Ausführungsbeispiel des Bolzens 50, der einen Teil der Zuhaltevorrichtung 44 bildet, in einer Schnittansicht. Der Bolzen 50 weist einen drehbar an diesem gelagerten Lagerkörper 54 auf, der hier als Kugel 56 ausgebildet ist. Die Kugel 56 ist drehbar in einer im Bolzen 50 ausgebildeten Lagerkörperaufnahme 58 angeordnet, wobei die Lagerkörperaufnahme 58 in einem Grundkörper 60 des Bolzens 50 ausgebildet ist. Dabei ist mehr als die Hälfte des Kugelvolumens in der der Lagerkörperaufnahme 58 angeordnet.

Die als Lagerkörper 54 verwendete Kugel 56 ist an einem freien Ende 62 des Bolzens 50 angeordnet, sodass beim Einführen des Bolzens 50 in das Betätigerelement 40 die Kugel 56 mit dem Betätigerelement 40 in Kontakt ist und auf diesem abrollen kann. Ebenso kann beim Ausführen des Bolzens aus dem Betätiger 36 die Kugel 56 auf dem Betätigerelement 40 abrollen.

Die in Fig. 5 gezeigte Lagerkörperaufnahme 58 weist einen ersten Abschnitt 64 und einen zweiten Abschnitt 66 auf. Der erste Abschnitt 64 ist konisch geformt, kann jedoch grundsätzlich auch zylindrisch, kugelkalottenförmig etc. sein. In dem in Fig. 5 gezeigten Ausführungsbeispiel kann die Kugel 56 in diesem ersten Abschnitt 64 in der Lagerkörperaufnahme 58 abrollen. Der zweite Abschnitt 66 ist zylindrisch, kann aber auch quaderförmig etc. sein. Die Kugel 56 wird in dem in Fig. 5 gezeigten Ausführungsbeispiels mittels des zweiten Abschnitts 66 in Position gehalten werden, wobei der zweite Abschnitt 66 gleichzeitig als Gehäuse fungiert.

Der Bolzen 50 ist zumindest zum Teil als zylindrischer Körper ausgestaltet. Mit einem zylindrischen Körper ist vorliegend ein Körper gemeint, dessen Querschnittsfläche entlang der Längsachse konstant ist. Der Bolzen kann insbesondere ein Kreiszylinder (wie beispielsweise in Fig. 5 gezeigt), aber auch ein quaderförmiger Körper oder ein Prisma etc. sein.

Der Bolzen 50 weist ferner eine Verliersicherung 78 zum Halten der Kugel 56 an dem Bolzen 50 auf. Die Lagerkörperaufnahme 58 weist hierzu an dem freien Ende 62 des Bolzens 50 eine Querschnittsverengung 80 auf, welche als Rastelement und somit als Verliersicherung 78 für die Kugel 56 fungiert. Die Querschnittsverengung 80 ist kleiner als der Durchmesser der Kugel 56.

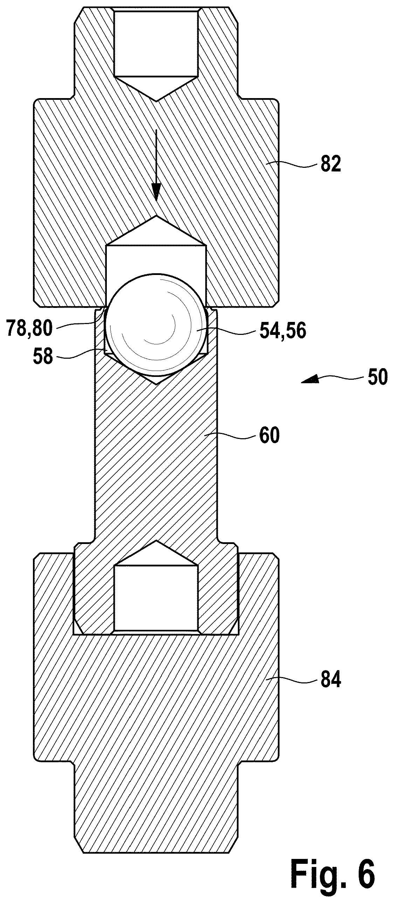

Die Querschnittsverengung 80 kann beispielsweise mittels eines Prägevorgangs gefertigt werden. Fig. 6 zeigt schematisch den Prägevorgang an dem in Fig. 5 gezeigten Bolzen 50. Beispielsweise ist der Bolzen 50 als Drehteil und die Lagerkörperaufnahme 58 durch Vornahme einer Bohrung gefertigt. Nach dem Einsetzen der Kugel 56 in die Lagerkörperaufnahme 58 des Bolzens 50 wird mittels eines Prägestempels 82 und eines Gegenhalters 84 der Querschnitt der Lagerkörperaufnahme 58 verengt. Der Pfeil in Fig. 6 zeigt die Richtung, in die der Prägestempel 82 gegen den Gegenhalter 84 gedrückt wird. Dabei ist zu beachten, dass der Prägevorgang die Drehbarkeit der gelagerten Kugel 56 erhalten muss bzw. nicht beeinträchtigen darf.

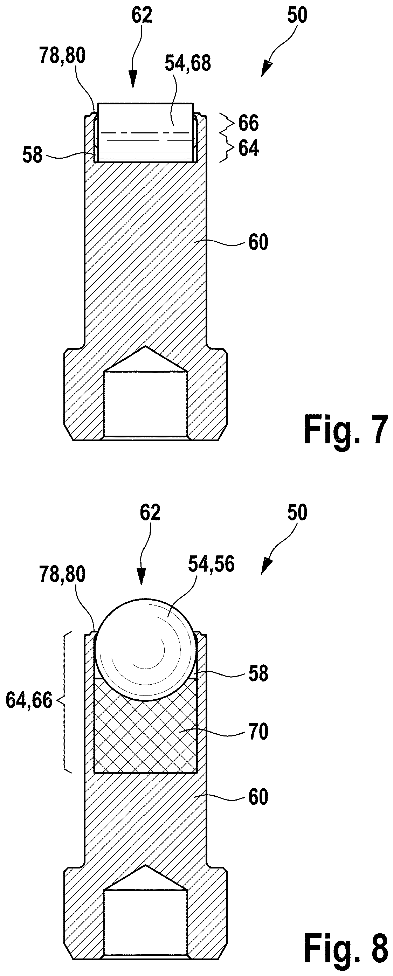

Fig. 7 zeigt ein zweites Ausführungsbeispiel des Bolzens 50, bei dem im Unterschied zu dem in Fig. 5 gezeigten Bolzen 50 der Lagerkörper 54 ein drehbar gelagerter Kreiszylinder 68 (oder auch "Tonne", "Nadel", etc.) ist. Ebenso wie die Kugel 56 kann der Kreiszylinder 68 auf dem Betätiger 36 abrollen. Es versteht sich jedoch, dass der Betätiger 36 im Falle der Ausführung des Lagerkörpers 54 als Tonne bzw. Kreiszylinder nur aus einer Richtung und nicht aus unterschiedlichen Richtungen in die Betätigeraufnahme 38 einführbar ist. Eine solche Ausführung wäre beispielsweise im Falle einer Schiebetür verwendbar.

Bei der in Fig. 7 gezeigten Lagerkörperaufnahme 58 weist der erste Abschnitt 64 eine dem Kreiszylinder 68 entsprechende Gegenform auf, die den Kreiszylinder in Position hält. Der zweite Abschnitt 66 ist quaderförmig.

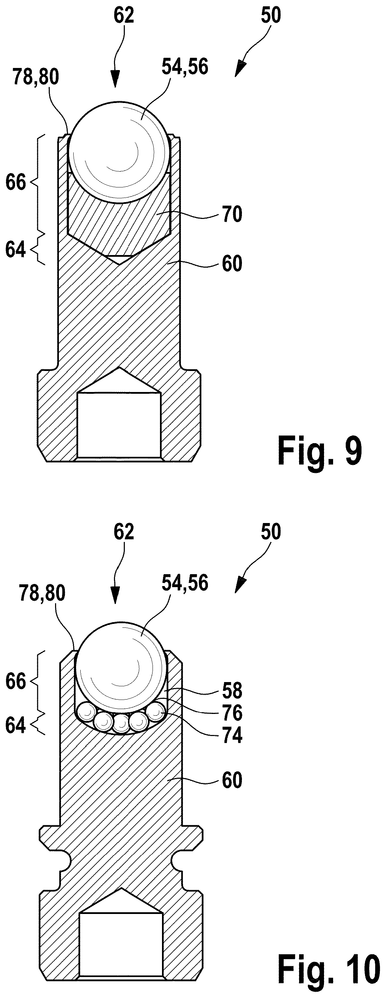

Fig. 8 und Fig. 9 zeigen zwei weitere Ausführungsbeispiele des Bolzens 50, in dem eine Lagerschale 70 in den Grundkörper 60 des Bolzens 50 eingesetzt ist und einen Teil der Lagerkörperaufnahme 58 bildet

In Fig. 8 geht der erste Abschnitt 64 der Lagerkörperaufnahme 58 in den zweiten Abschnitt 66 über, bzw. sind der erste Abschnitt 64 und der zweite Abschnitt 66 beide zylindrisch mit dem gleichen Durchmesser. In Fig. 9 ist der erste Abschnitt 64 konisch geformt und der zweite Abschnitt 66 zylindrisch geformt. Der konisch ausgebildete erste Abschnitt 64 kann mittels einer gewöhnlichen Bohrung gefertigt werden. Die Lagerschalen 70 in den in Fig. 8 und 9 gezeigten Ausführungsbeispielen weisen eine jeweils dem ersten Abschnitt 64 und dem zweiten Abschnitt 66 entsprechende Gegenform auf.

In den in Fig. 8 und 9 gezeigten Ausführungsbeispielen ist die Lagerschale 70 von dem freien Ende 62 her in die Lagerkörperaufnahme 58 des Bolzens 50 eingesetzt. Vorteilhafterweise können die Lagerschale 70 und der Grundkörper 60 separat hergestellt sein, was eine einfachere Herstellung ermöglicht. Das Material (der Werkstoff) des Grundkörpers 60 kann beispielsweise ein vergleichsweise günstiger Automatenstahl sein, während der Werkstoff der Lagerkörperaufnahme 70 hinsichtlich Verschleißeigenschaften optimiert sein kann.

Fig. 10 zeigt ein weiteres Ausführungsbeispiel des Bolzens 50. Die Lagerkörperaufnahme 58 ist hier, ähnlich wie bei dem in Fig. 5 gezeigten Ausführungsbeispiel unmittelbar in dem Grundkörper 60 des Bolzens 50 ausgebildet. Grundsätzlich könnte jedoch auch hier eine Lagerschale 70 wie zuvor vorgesehen sein.

In der Lagerkörperaufnahme 58 ist eine Vielzahl von Lagerkugeln 74 angeordnet, auf denen die Kugel 56 abrollen kann. Die Lagerkugeln 74 sind in der Lagerkörperaufnahme 58 zwischen der Kugel 56 und dem Grundkörper 60 des Bolzens 50 angeordnet.

Die Lagerkugeln 74 weisen einen Durchmesser auf, der kleiner ist als der Durchmesser der Kugel 56. Dadurch kann die Kugel 56 gleichzeitig auf einer Vielzahl von Lagerkugeln 74 mit einer Vielzahl von Kontaktpunkten 76 abrollen. Zudem können sich die Lagerkugeln 74 als Ganzes der Kontur der Lagerkörperaufnahme 58 (insbesondere dem ersten Abschnitt 64) anpassen und sich in der Lagerköperaufnahme 58 verteilen. Der erste Abschnitt 64 der Lagerkörperaufnahme 58 ist hier kugelkalottenförmig ausgestaltet.

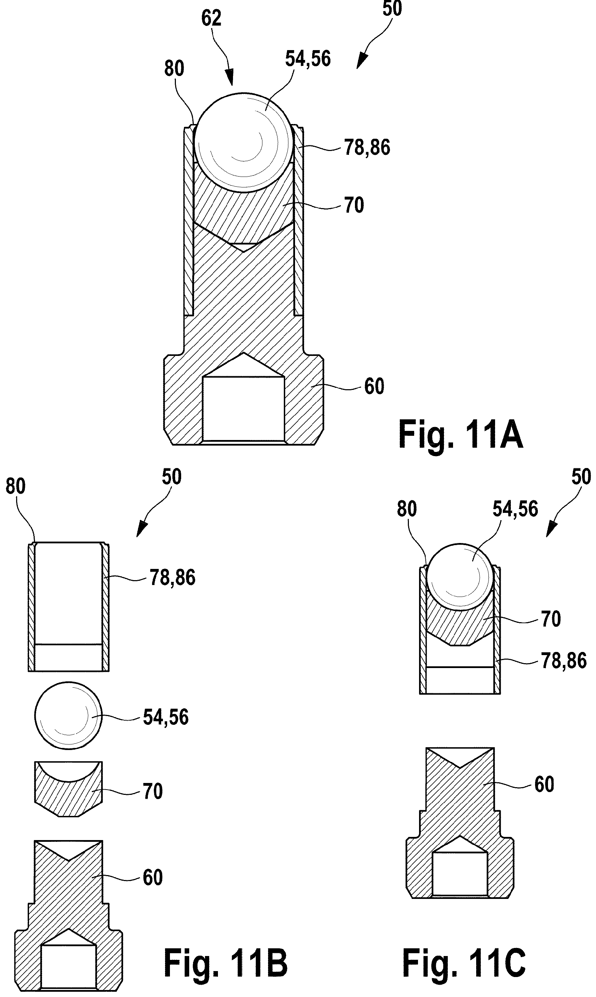

Fig. 11A zeigt ein weiteres Ausführungsbeispiel des Bolzens 50. Im Unterschied zu den in Fig. 5-10 gezeigten Ausführungsbeispielen weist der Bolzen 50 hier eine zusätzliche Hülse 86 auf, an der die Verliersicherung 78 für die Kugel 56 ausgebildet ist. Die Hülse 86 ist an dem Grundkörper 60 des Bolzens 50 angeordnet und bildet auch einen Teil der Lagerkörperaufnahme 58 aus.

Im Unterschied zu den in Fig. 5-10 gezeigten Ausführungsbeispielen des Bolzens 50 ist in Fig. 11A die Querschnittsverengung 80 nicht an dem Grundkörper 60, sondern an der Hülse 86 ausgebildet. Die Kugel 56 und die Lagerschale 70 sind in die Hülse 86 eingesetzt. Die Hülse 86 bildet somit ein Gehäuse für einen Teil der Kugel 56 und die Lagerschale 70 aus. Es versteht sich jedoch, dass bei einer Ausgestaltung des Bolzens 50 mit einer solchen Hülse 86 die Lagerschale 70, welche hier als separates Bauteil ausgebildet ist, nicht zwangsläufig vorgesehen sein muss. Stattdessen kann auch bei einer Ausgestaltung des Bolzens 50 mit Hülse 86 die Lagerkörperaufnahme 58 unmittelbar in den Grundkörper 60 des Bolzens 50 integriert sein, wie dies beispielsweise bei dem in Fig. 5 gezeigten Bolzen 50 der Fall ist.

Fig. 11B und 11C zeigen schematisch die Montage (den Zusammenbau) des in Fig. 11A gezeigten Bolzens 50. Ausgehend von dem in Fig. 11B gezeigten Zustand wird zunächst die Kugel 56 und dann die Lagerschale 70 in die Hülse 86 eingesetzt (Fig. 11C). Anschließend wird der Grundkörper 60 des Bolzens 50 in die Hülse 86 eingesetzt bzw. die Hülse 86 mit der Kugel 56 und der Lagerschale 70 auf den Grundkörper 60 des Bolzens 50 aufgesetzt (Fig. 11A). Mit der Hülse 86 kann der in Fig. 6 gezeigte Prägevorgang als Fertigungsschritt entfallen, sodass der Prägestempel 82 (und der Gegenhalter 84) als separates Werkzeug für die Fertigung nicht benötigt werden, was sich vereinfachend auf die Montage auswirkt.

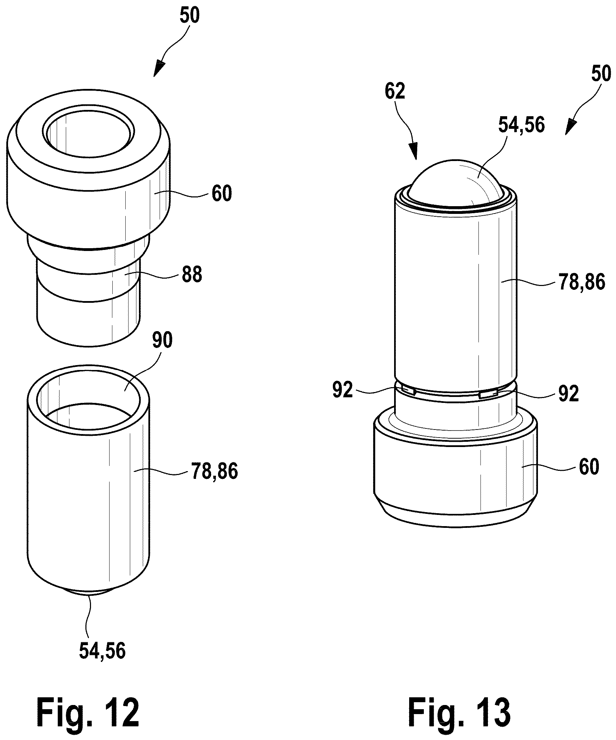

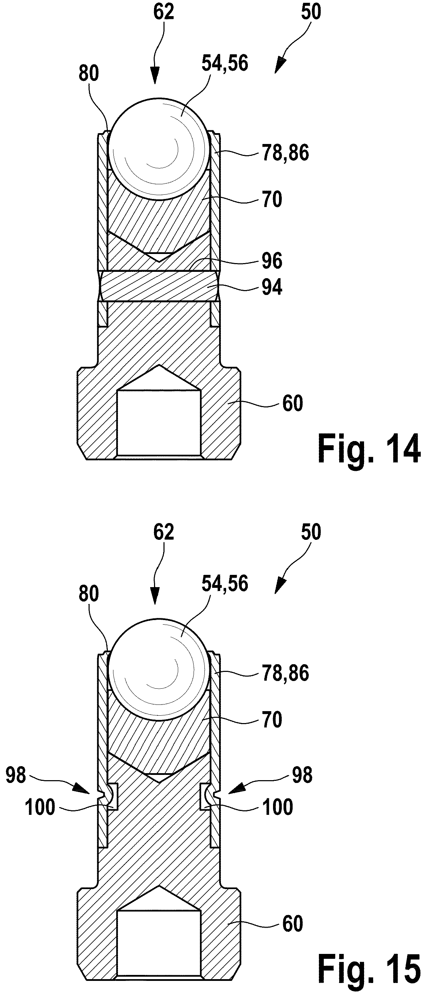

Die Hülse 86 kann lösbar oder nicht lösbar mit dem Grundkörper 60 des Bolzens 50 verbunden sein. Fig. 12-15 zeigen hierzu verschiedene Ausführungsbeispiele. Beispielsweise kann die Hülse 86 mit dem Grundkörper 60 des Bolzens 50 verschraubt (Fig. 12) oder verschweißt bzw. verlötet (Fig. 13) sein, oder mittels eines Stifts (Fig. 14) oder einer Verprägung (Fig. 15) an dem Grundkörper 60 befestigt sein.

Fig. 12 zeigt den Grundkörper 60 mit einem Außengewinde 88 und die Hülse 86 mit einem entsprechenden Innengewinde 90, welches auf einem Teil der Innenfläche der Hülse 86 ausgebildet ist. Der Grundkörper 60 des Bolzens 50 und die Hülse 86 können somit lösbar miteinander verschraubt sein. Für einen Austausch der Kugel 56, beispielsweise nach einer bestimmten Anzahl von Schließ- und Öffnungsvorgängen der Zuhaltevorrichtung 44, kann die Hülse 86 von dem Grundkörper 60 abgeschraubt werden.

Fig. 13 zeigt den Bolzen 50 mit der Hülse 86, die mittels einer Vielzahl von Schweißnähten 92 an dem Grundkörper 60 befestigt ist. Die Schweißnähte 92 sind in diesem Ausführungsbeispiel gleichmäßig über den Umfang des Grundkörpers 60 bzw. der Hülse 86 verteilt.

Fig. 14 zeigt den Bolzen 50 mit der Hülse 86 und einem Stift 94, der in einer Durchgangsbohrung 96 des Grundkörpers 60 des Bolzens 50 und der Hülse 86 angeordnet ist und den Grundkörper 60 mit der Hülse 86 befestigt. Die Mittelachsen der Durchgangsbohrung 96 des Grundkörpers 60 und der Hülse 86 fluchten miteinander und verlaufen im Wesentlichen orthogonal zu der Längsachse des Bolzens 50.

Fig. 15 zeigt den Bolzen 50 mit der Hülse 86, wobei die Hülse 86 die mittels Verprägungen 98 an dem Grundkörper 60 befestigt ist. Die Verprägung 98 entsteht durch das plastische Eindrücken eines Teils der Hülse 86 in den Grundkörper 60, wodurch die Hülse 86 mittels Kraft- und Formschluss mit dem Grundkörper 60 verbunden ist. Beispielsweise kann die Verprägung 98 durch einen Körner eingebracht werden. In dem in Fig. 15 gezeigten Ausführungsbeispiel weist der Grundkörper 60 zwei Aussparungen 100 (oder auch Aufnahmen) auf, in welche ein Teil der Hülse 86 eingedrückt ist. Ebenso kann der Grundkörper 60 des Bolzens 50 ein oder mehrere Aussparungen 100 zum Verprägen aufweisen, welche punktförmig ausgebildet sind, kontinuierlich umlaufend verlaufen oder teilweise umlaufend verlaufen. Gleichwohl kann der Grundkörper 60 auch keine vorgefertigten Aussparungen 100 aufweisen, sodass mittels Verprägung ein Teil der Hülse 86 plastisch in den Werkstoff des Grundkörpers 60 hineingedrückt ist.

Es versteht sich, dass die in den Figuren gezeigten Ausführungsbeispiele lediglich beispielhafte Ausgestaltungen des erfindungsgemäßen Schutztürüberwachungsmoduls zeigen, die die Vorteile des erfindungsgemäßen Schutztürüberwachungsmoduls illustrativ veranschaulichen sollen. Diverse Modifikationen können an diesen Ausführungsbeispielen vorgenommen werden, ohne den Rahmen der vorliegenden Erfindung zu verlassen.

### Bezugszeichenliste

- 10: Schutztürüberwachungssystem
- 12: Roboter
- 14: Schutztür
- 16: Schutztürüberwachungsmodul
- 17: Türteil
- 18: Rahmenteil
- 20: unbeweglicher Teil
- 22, 24: Leitungen
- 26: Steuerungseinheit
- 28, 30: Schütze
- 32: Stromversorgung
- 34: Grundgerät
- 36: Betätiger
- 38: Betätigeraufnahme
- 40: Betätigerelement
- 42: Durchgangsbohrung
- 44: Zuhaltevorrichtung
- 46: Kontrollanzeige
- 48: Bedieneinrichtung
- 50: Bolzen
- 52: Federeinrichtung
- 54: Lagerkörper
- 56: Kugel
- 58: Lagerkörperaufnahme
- 60: Grundkörper
- 62: freies Ende
- 64: erster Abschnitt
- 66: zweiter Abschnitt
- 68: Kreiszylinder, Tonne
- 70: Lagerschale
- 74: Lagerkugel
- 76: Kontaktpunkt
- 78: Verliersicherung
- 80: Querschnittsverengung
- 82: Prägestempel
- 84: Gegenhalter
- 86: Hülse
- 88: Außengewinde
- 90: Innengewinde
- 92: Schweißnaht
- 94: Stift
- 96: Durchgangsbohrung
- 98: Verprägung
- 100: Aussparung

## Patentansprüche

1. Schutztürüberwachungsmodul (16) zur Überwachung eines Zustands einer Schutztür (14), wobei das Schutztürüberwachungsmodul (16) eine Betätigeraufnahme (38) zur Aufnahme eines Betätigers (36) aufweist und dazu eingerichtet ist, ein Schutztürsignal zu erzeugen, wenn der Betätiger (36) in die Betätigeraufnahme (38) eingeführt ist, wobei die Betätigeraufnahme (38) eine Zuhaltevorrichtung (44) aufweist, die dazu ausgebildet ist, in einem aktivierten Zustand den Betätiger (36) in der Betätigeraufnahme (38) festzuhalten, wobei die Zuhaltevorrichtung (44) eine Federeinrichtung (52), eine Verriegelungseinrichtung (53) und einen Bolzen (50) mit einer Lagerkörperaufnahme (58) und einem in der Lagerkörperaufnahme (58) drehbar gelagerten Lagerkörper (54) aufweist, der an einem freien Ende (62) des Bolzens (50), welches dazu ausgebildet ist, in dem aktivierten Zustand in den Betätiger (36) einzugreifen, angeordnet ist,
**dadurch gekennzeichnet, dass** der Bolzen (50) mittels der Federeinrichtung (52) vorgespannt ist, so dass der Bolzen (50) beim Einführen des Betätigers (36) in die Betätigeraufnahme (38) und beim Ausführen des Betätigers (36) aus der Betätigeraufnahme (38) entgegen der von der Federeinrichtung (52) erzeugten Federkraft ausweicht, und dass die Verriegelungseinrichtung (53) dazu ausgebildet ist, den Bolzen (50) in dem aktivierten Zustand der Zuhaltevorrichung (44) zu verriegeln, wodurch der Betätiger (36) in der Betätigeraufnahme (38) festgehalten wird.

2. Schutztürüberwachungsmodul (16) nach Anspruch 1,
wobei der Bolzen (50) eine Verliersicherung (78) aufweist, die dazu ausgebildet ist, den drehbar gelagerten Lagerkörper (54) verliersicher an dem Bolzen (50) zu halten.

3. Schutztürüberwachungsmodul (16) nach Anspruch 2,
wobei die Verliersicherung (78) mittels einer Querschnittsverengung (80) der Lagerkörperaufnahme (58) gebildet ist.

4. Schutztürüberwachungsmodul (16) nach Anspruch 3,
wobei der Durchmesser der Querschnittsverengung (80) kleiner als der Durchmesser des Lagerkörpers (54) ist.

5. Schutztürüberwachungsmodul (16) nach einem der vorstehenden Ansprüche, wobei der Lagerkörper (54) eine Kugel (56) ist.

6. Schutztürüberwachungsmodul (16) nach einem der vorstehenden Ansprüche, wobei die Lagerkörperaufnahme (58) einen ersten Abschnitt (64), der konisch, kugelkalottenförmig oder zylindrisch ist, und einen zweiten Abschnitt (66), der zylindrisch ist, aufweist.

7. Schutztürüberwachungsmodul (16) nach einem der vorstehenden Ansprüche, wobei mehr als die Hälfte des Lagerkörpers (54) innerhalb der Lagerkörperaufnahme (58) angeordnet ist.

8. Schutztürüberwachungsmodul (16) nach einem der vorstehenden Ansprüche, wobei die Federeinrichtung (52) an einer dem freien Ende (62) entgegengesetzten Seite des Bolzens (50) angreift und dazu ausgebildet ist, den Lagerkörper (54) in Eingriff mit dem Betätiger (36) zu drücken.

9. Schutztürüberwachungsmodul (16) nach einem der vorstehenden Ansprüche,
wobei der Bolzen (50) einen Grundkörper (60) und eine darin eingesetzte Lagerschale (70) aufweist, die zumindest einen Teil der Lagerkörperaufnahme (58) bildet.

10. Schutztürüberwachungsmodul (16) nach Anspruch 9,
wobei der Grundkörper (60) des Bolzens (50) ein erstes Material aufweist und die Lagerschale (70) ein von dem ersten Material unterschiedliches, zweites Material aufweist.

11. Schutztürüberwachungsmodul (16) nach einem der vorstehenden Ansprüche, wobei der Bolzen (50) eine Hülse (86) aufweist, die an einem Grundkörper (60) des Bolzens (50) befestigt ist und zumindest einen Teil der Lagerkörperaufnahme (58) bildet.

12. Schutztürüberwachungsmodul (16) nach Anspruch 2 und 11,
wobei die Hülse (86) zumindest einen Teil der Verliersicherung (78) bildet.

13. Schutztürüberwachungsmodul (16) nach Anspruch 11 oder 12,
wobei die Hülse (86) mit dem Grundkörper (60) verschraubt, vernietet, verstiftet, verprägt und/oder stoffschlüssig verbunden ist.

14. Schutztürüberwachungsmodul (16) nach einem der vorstehenden Ansprüche, wobei der Bolzen (50) eine Vielzahl von Lagerkugeln (74) aufweist, die in der Lagerkörperaufnahme (58) angeordnet sind.

15. Schutztürüberwachungssystem mit:
- einer Schutztür (14) als Zugang zu einem Sicherheitsbereich,
- einem Schutztürüberwachungsmodul (16) nach einem der Ansprüche 1 bis 14 zur Überwachung eines Zustands der Schutztür (14),
- einem Betätiger (36) und
- einer Steuerungseinheit (26), welche dazu eingerichtet ist, das Schutztürsignal auszulesen und eine im Sicherheitsbereich befindliche Maschine oder Anlage (12) in Abhängigkeit des Schutztürsignals zu steuern.

## Claims

1. A safety gate monitoring module (16) for monitoring a state of a safety gate (14), wherein the safety gate monitoring module (16) comprises an actuator receptacle (38) for receiving an actuator (36) and is configured to produce a safety gate signal when the actuator (36) is inserted into the actuator receptacle (38), wherein the actuator receptacle (38) comprises a guard lock device (44), which is configured to hold the actuator (36) firmly in the actuator receptacle (38) in an activated state, wherein the guard lock device (44) comprises a spring device (52), a locking device (53) and a bolt (50) having a bearing element receptacle (58) and a bearing element (54), which is rotatably mounted in the bearing element receptacle (58) and is arranged at a free end (62) of the bolt (50), which end is configured to engage in the actuator (36) in the activated state,
**characterized in that** the bolt (50) is preloaded by means of the spring device (52), such that the bolt (50) gives way counter to the spring force produced by the spring device (52) as the actuator (36) is inserted into the actuator receptacle (38) and withdrawn from the actuator receptacle (38), and **in that** the locking device (53) is configured to lock the bolt (50) in the activated state of the guard lock device (44), as a result of which the actuator (36) is held firmly in the actuator receptacle (38).

2. The safety gate monitoring module (16) according to claim 1,
wherein the bolt (50) comprises a loss prevention means (78), which is configured to hold the rotatably mounted bearing element (54) captive on the bolt (50).

3. The safety gate monitoring module (16) according to claim 2,
wherein the loss prevention means (78) is formed by means of a cross-sectional constriction (80) of the bearing element receptacle (58).

4. The safety gate monitoring module (16) according to claim 3,
wherein the diameter of the cross-sectional constriction (80) is smaller than the diameter of the bearing element (54).

5. The safety gate monitoring module (16) according to any of the preceding claims, wherein the bearing element (54) is a ball (56).

6. The safety gate monitoring module (16) according to any of the preceding claims, wherein the bearing element receptacle (58) comprises a first portion (64), which is conical, spherical-cup-shaped or cylindrical, and a second portion (66), which is cylindrical.

7. The safety gate monitoring module (16) according to any of the preceding claims, wherein more than half of the bearing element (54) is arranged within the bearing element receptacle (58).

8. The safety gate monitoring module (16) according to any of the preceding claims, wherein the spring device (52) engages on an opposite side of the bolt (50) from the free end (62) and is configured to push the bearing element (54) into engagement with the actuator (36).

9. The safety gate monitoring module (16) according to any of the preceding claims, wherein the bolt (50) comprises a main body (60) and a bearing shell (70), which is inserted therein and forms at least part of the bearing element receptacle (58).

10. The safety gate monitoring module (16) according to claim 9,
wherein the main body (60) of the bolt (50) comprises a first material, and the bearing shell (70) comprises a second material, which is different from the first material.

11. The safety gate monitoring module (16) according to any of the preceding claims, wherein the bolt (50) comprises a sleeve (86), which is secured on a main body (60) of the bolt (50) and forms at least part of the bearing element receptacle (58).

12. The safety gate monitoring module (16) according to claims 2 and 11,
wherein the sleeve (86) forms at least part of the loss prevention means (78).

13. The safety gate monitoring module (16) according to claim 11 or 12,
wherein the sleeve (86) is screwed, riveted, pinned, stamped and/or materially connected to the main body (60).

14. The safety gate monitoring module (16) according to any of the preceding claims, wherein the bolt (50) comprises a multiplicity of bearing balls (74), which are arranged in the bearing element receptacle (58).

15. A safety gate monitoring system comprising:
- a safety gate (14) as an access to a safety area,
- a safety gate monitoring module (16) according to any of claims 1 to 14 for monitoring a state of the safety gate (14),
- an actuator (36) and
- a control unit (26), which is configured to read out the safety gate signal and to control a machine or system (12) located in the safety area in accordance with the safety gate signal.

## Revendications

1. Module de surveillance de porte de protection (16) permettant de surveiller l'état d'une porte de protection (14), dans lequel le module de surveillance de porte de protection (16) présente un logement pour actionneur (38) permettant de recevoir un actionneur (36) et est configuré pour générer un signal de porte de protection lorsque l'actionneur (36) est inséré dans le logement pour actionneur (38), dans lequel le logement pour actionneur (38) présente un dispositif de maintien (44) réalisé pour maintenir l'actionneur (36) dans le logement pour actionneur (38) dans un état activé, dans lequel le dispositif de maintien (44) présente un appareil formant ressort (52), un appareil de verrouillage (53) et un boulon (50) comportant un logement pour corps formant palier (58) et un corps formant palier (54) monté de manière à pouvoir tourner dans le logement pour corps formant palier (58) et disposé à une extrémité libre (62) du boulon (50), lequel boulon est réalisé pour venir en prise dans l'actionneur (36) dans l'état activé,
**caractérisé en ce que** le boulon (50) est précontraint par l'appareil formant ressort (52), de sorte que le boulon (50), lors de l'insertion de l'actionneur (36) dans le logement pour actionneur (38) et lors du retrait de l'actionneur (36) du logement pour actionneur (38), s'écarte à l'encontre de la force de ressort générée par l'appareil formant ressort (52), et **en ce que** l'appareil de verrouillage (53) est réalisé pour verrouiller le boulon (50) lorsque le dispositif de maintien (44) est dans l'état activé, moyennant quoi l'actionneur (36) est maintenu dans le logement pour actionneur (38).

2. Module de surveillance de porte de protection (16) selon la revendication 1,
dans lequel le boulon (50) présente un moyen antiperte (78) réalisé pour maintenir le corps formant palier (54) monté de manière à pouvoir tourner sur le boulon (50) de manière à empêcher sa perte.

3. Module de surveillance de porte de protection (16) selon la revendication 2,
dans lequel le moyen antiperte (78) est formé par un rétrécissement de section transversale (80) du logement pour corps formant palier (58).

4. Module de surveillance de porte de protection (16) selon la revendication 3,
dans lequel le diamètre du rétrécissement de section transversale (80) est inférieur au diamètre du corps formant palier (54).

5. Module de surveillance de porte de protection (16) selon l'une des revendications précédentes,
dans lequel le corps formant palier (54) est une bille (56).

6. Module de surveillance de porte de protection (16) selon l'une des revendications précédentes,
dans lequel le logement pour corps formant palier (58) présente une première section (64) qui est conique, en forme de calotte sphérique ou cylindrique, et une seconde section (66) qui est cylindrique.

7. Module de surveillance de porte de protection (16) selon l'une des revendications précédentes,
dans lequel plus de la moitié du corps formant palier (54) est disposée à l'intérieur du logement pour corps formant palier (58).

8. Module de surveillance de porte de protection (16) selon l'une des revendications précédentes,
dans lequel l'appareil formant ressort (52) est appliqué sur le côté du boulon (50) opposé à l'extrémité libre (62) et est réalisé pour pousser le corps formant palier (54) en prise avec l'actionneur (36).

9. Module de surveillance de porte de protection (16) selon l'une des revendications précédentes,
dans lequel le boulon (50) présente un corps de base (60) et une coque de palier (70) insérée dans celui-ci, laquelle forme au moins une partie du logement pour corps formant palier (58).

10. Module de surveillance de porte de protection (16) selon la revendication 9,
dans lequel le corps de base (60) du boulon (50) est constitué d'un premier matériau et la coque de support (70) est constituée d'un second matériau différent du premier matériau.

11. Module de surveillance de porte de protection (16) selon l'une des revendications précédentes,
dans lequel le boulon (50) présente une douille (86) qui est fixée à un corps de base (60) du boulon (50) et qui forme au moins une partie du logement pour corps formant palier (58).

12. Module de surveillance de porte de protection (16) selon les revendications 2 et 11,
dans lequel la douille (86) forme au moins une partie du moyen antiperte (78).

13. Module de surveillance de porte de protection (16) selon la revendication 11 ou 12,
dans lequel la douille (86) est vissée, rivetée, goupillée, estampée et/ou reliée par liaison de matière au corps de base (60).

14. Module de surveillance de porte de protection (16) selon l'une des revendications précédentes,
dans lequel le boulon (50) présente une pluralité de billes de palier (74) disposées dans le logement pour corps formant palier (58).

15. Système de surveillance de porte de protection comportant :
- une porte de protection (14) servant d'accès à une zone de sécurité,
- un module de surveillance de porte de protection (16) selon l'une des revendications 1 à 14 pour la surveillance d'un état de la porte de protection (14),
- un actionneur (36) et
- une unité de commande (26) qui est configurée pour lire le signal de porte de protection et pour commander une machine ou une installation (12) se trouvant dans la zone de sécurité en fonction du signal de porte de protection.
